# EUROPÄISCHE PATENTSCHRIFT

(11) **EP 3 382 901 B1**
(45) Veröffentlichungstag und Bekanntmachung des Hinweises auf die Patenterteilung: **11.08.2021**
(21) Anmeldenummer: 17163462.9
(22) Anmeldetag: 29.03.2017
(51) Int. Cl.: H04B 3/54

(54) **ERKENNEN VON HOCHFREQUENZSTÖRUNGEN IN EINEM VERSORGUNGSNETZ BASIEREND AUF CHARAKTERISTISCHEN SIGNATUREN**
DETECTION OF HIGH FREQUENCY DISTURBANCES IN A POWER NETWORK BASED ON CHARACTERISTIC SIGNATURES
RECONNAISSANCE DE PERTURBATIONS HAUTE FRÉQUENCE DANS UN RÉSEAU D'ALIMENTATION SE BASANT SUR DES SIGNATURES CARACTÉRISTIQUES

(43) Veröffentlichungstag der Anmeldung: 03.10.2018
(73) Patentinhaber: Siemens Aktiengesellschaft, 80333 München (DE)
(72) Erfinder: Pfähler, Erik, 91186 Büchenbach/Tennenlohe (DE)

(56) Entgegenhaltungen:
- EP-A1- 2 784 944
- EP-A1- 2 863 551

## Beschreibung

Die vorliegende Erfindung betrifft im Allgemeinen das technische Gebiet von elektrischen Versorgungsnetzen und im Besonderen die Qualität der von elektrischen Versorgungsnetzen bereitgestellten Versorgungsspannung. Insbesondere betrifft die vorliegende Erfindung ein Verfahren sowie eine Vorrichtung und ein Computerprogramm zum Analysieren von hochfrequenten Störungen in bzw. auf einem elektrischen Versorgungsnetz. Ferner betrifft die vorliegende Erfindung ein Verfahren zum Reduzieren (der Intensität bzw. der Stärke) einer Hochfrequenzstörung in einem elektrischen Versorgungsnetz.

In elektrischen Versorgungsnetzen, insbesondere in sog. Niederspannung- und Mittelspannung-Versorgungsnetzen, treten aufgrund der zunehmenden Verwendung von "nicht-linearen" elektrischen Geräten Oberschwingungen auf, welche in Bezug auf die Versorgungsspannung hochfrequente Störungen darstellen und die Netzqualität nachteilig beeinflussen. Ein nichtlineares elektrisches Gerät kann beispielsweise ein nichtlinearer Verbraucher sein, der ein sog. Schaltnetzteil aufweist, mit dem mit einer hochfrequenten Taktung angesteuerte Halbleiterschalter Ströme und/oder Spannungen schalten. Ferner gibt es auch nicht-lineare elektrische Geräte, welche Strom und/oder Spannung in ein Versorgungsnetz einspeisen und ebenso zu Hochfrequenzstörungen beitragen. Solche Geräte sind z.B. Wechselrichter, über die beispielsweise regenerativ erzeugte elektrische Energie, beispielsweise erzeugt von Photovoltaik-Anlagen, mit der passenden Frequenz in ein elektrisches Versorgungsnetz eingespeist wird. Außerdem können auch sog. Trägerfrequenzanlagen oder auf Englisch "Power Line Carrier" (PLC) zu Hochfrequenzstörungen führen. Solche Geräte modulieren nämlich bewusst hochfrequente Signale auf die betreffende Stromleitung auf und nutzen diese für eine Datenkommunikation. Die entsprechenden Modulationssignale können jedoch für andere an dem betreffenden Versorgungsnetz angeschlossene Geräte hochfrequente Störsignale darstellen.

Ebenso ist es möglich, dass eine Signalübertragung mittels einer Trägerfrequenzanlage von anderen Geräten gestört werden kann. Ein Beispiel ist ein automatisches Auslesen von Stromzählern über PLC, die bei hochfrequenten Störungen ausfällt oder sogar falsche Werte überträgt.

Hochfrequenzstörungen bzw. unerwünschte Oberschwingungen höherer Ordnung können für eine Vielzahl von verschiedenen elektrischen Geräte nachteilig sein. So führen Hochfrequenzstörungen in beliebigen elektrischen Leitern oder Kabeln aufgrund des physikalischen Skin Effektes zu erhöhten Verlusten und zu stärkeren Magnetfeldern, welche für die sog. Elektromagnetische Verträglichkeit (EMV) nachteilig sind. Außerdem können Neutralleiter überlastet werden. Bei elektromechanischen Wandlern wie Generatoren und Motoren sowie bei Transformatoren können mechanische Resonanzen angeregt und dadurch ein entsprechend überhöhter Geräuschpegel und/oder höhere Verluste erzeugt werden. Auch Kondensatoren als einfache passive elektronische Bauelemente können von Hochfrequenzstörungen nachteilig beeinflusst werden, weil beispielsweise in einem nie vollständig idealen Dielektrikum erhöhte Verluste entstehen, die wiederum zu einer vorzeitigen Alterung des Kondensators beitragen. Außerdem ist es offensichtlich, dass Hochfrequenzstörungen insbesondere bei empfindlichen elektrischen Geräten wie Kommunikationsvorrichtungen oder FI-Schutzschaltern zu Fehlfunktionen führen können.

Daher ist es ein stetiges Bedürfnis Hochfrequenzstörungen in einem elektrischen Versorgungsnetz zu minimieren und dadurch die Netzqualität zu verbessern. Nachfolgend wird in diesem Dokument die Netzqualität auch als Netzhygiene bezeichnet. Elektrische Geräte, welche in dem elektrischen Versorgungsnetz, an dem sie angeschlossen sind, Hochfrequenzstörungen verursachen, werden anschaulich auch als Netzverschmutzer bezeichnet.

Zum Verbessern der Netzhygiene ist es bekannt, Hochfrequenzstörungen durch aktive und/oder passive Filter abzuschwächen. Solche Maßnahmen sind jedoch nur sehr wenig spezifisch und erhöhen zum Teil erheblich die Verluste in einem elektrischen Versorgungsnetz. Außerdem eignet sich eine Abschwächung bzw. Dämpfung von Hochfrequenzstörungen nicht für alle Frequenzbereiche, in denen heutzutage Hochfrequenzstörungen auftreten. Insbesondere in Frequenzbereichen oberhalb von 9kHz für Oberschwingungsströme und 2kHz für Oberschwingungsspannungen, definiert durch die Internationale Norm IEC 61000-4-7 für die Netzqualität, ist es sehr schwierig, basierend auf reinen Filter-Lösungen Hochfrequenzstörungen zu unterbinden.

Aus der EP 2 863 551 A1 ist ein Verfahren zur Erkennung des Betriebszustands einer konkreten an ein Energieversorgungsnetz angeschlossenen Komponente bekannt. Die EP 2 784 944 A1 beschreibt ein Verfahren zur Erkennung einer an ein Energieversorgungsnetz angeschlossenen Komponente.

Der Erfindung liegt die Aufgabe zugrunde, Voraussetzungen zu schaffen, um die Netzqualität von elektrischen Versorgungsnetzen in einem sehr breiten Frequenzbereich von möglichen Oberschwingungen zu verbessern.

Diese Aufgabe wird gelöst durch die Gegenstände der unabhängigen Patentansprüche. Vorteilhafte Ausführungsformen, weitere Merkmale und Details der vorliegenden Erfindung ergeben sich aus den abhängigen Ansprüchen, der Beschreibung und der Zeichnung.

Gemäß einem ersten Aspekt der Erfindung wird beschrieben ein Verfahren zum Identifizieren einer elektrischen Vorrichtung, die eine Hochfrequenzstörung in einem elektrischen Versorgungsnetz , an welchem mehrere elektrische Vorrichtungen angeschlossen sind, verursacht, wobei die Hochfrequenzstörung innerhalb eines Frequenzbereiches liegt, der oberhalb von 2kHz und unterhalb von 1000 kHz liegt. Das beschriebene Verfahren weist auf (a) ein Erfassen eines zeitlichen Verlaufs einer elektrischen Messgröße des elektrischen Versorgungsnetzes; (b) ein Ermitteln einer charakteristischen Signatur der elektrischen Messgröße, wobei die charakteristische Signatur indikativ ist für die Hochfrequenzstörung; (c) ein Vergleichen der charakteristischen Signatur mit einer Mehrzahl von in einer Datenbank hinterlegten Referenz-Signaturen, wobei jeweils eine Referenz-Signatur einer Referenz-Hochfrequenzstörung zugeordnet ist, die (i) von einer sich im Betrieb befindlichen elektrischen Referenz-Vorrichtung verursacht wird und (ii) auf das elektrische Versorgungsnetz übertragbar ist; (d) ein Auswählen einer Referenz-Signatur, welche mit der charakteristischen Signatur die größte Ähnlichkeit hat; und (e) ein Identifizieren des Verursachers der Hochfrequenzstörung, wobei diejenige der mehreren angeschlossenen elektrischen Vorrichtungen als Verursacher identifiziert wird, welche hinsichtlich ihres Typs derjenigen elektrischen Referenz-Vorrichtung entspricht, welcher die ausgewählte Referenz-Signatur zugeordnet ist.

Dem beschriebenen Verfahren liegt die Erkenntnis zugrunde, dass in einer Datenbank eine Mehrzahl von Referenz-Signaturen, gespeichert sein können, wobei jede Referenz-Signatur indikativ für eine potentielle Hochfrequenzstörung ist, die von einer bestimmten an das elektrische Versorgungsnetz angeschlossenen elektrischen Vorrichtung verursacht werden kann. Sobald mittels einer geeigneten Datenverarbeitungseinrichtung festgestellt worden ist, dass die erfasste bzw. ermittelte charakteristische Signatur auf dem elektrischen Versorgungsnetz (zumindest annähernd) einer bestimmten Referenz-Signatur der Mehrzahl von Referenz-Signaturen entspricht, wird davon ausgegangen, dass die Ursache der auftretenden Hochfrequenzstörung eine an dem elektrischen Versorgungsnetz angeschlossenen elektrische Vorrichtung ist, welche von dem gleichen oder von zumindest einem ähnlichen Typ ist wie die elektrische Referenz-Vorrichtung, welche potentiell für eine Referenz-Hochfrequenzstörung verantwortlich ist, die der erfassten Hochfrequenzstörung entspricht. Erfindungsgemäß erfolgt der Vergleich zwischen der realen bzw. erfassten Hochfrequenzstörung und dieser Referenz-Hochfrequenzstörung dadurch, dass die ermittelte charakteristische Signatur, welche der realen Hochfrequenzstörung zugeordnet ist, mit der betreffenden Referenz-Signatur verglichen wird, welche der betreffenden elektrischen Referenzvorrichtung zugeordnet ist.

Wenn auf diese Weise die für eine Hochfrequenz-Verschmutzung verantwortliche und an das elektrische Versorgungsnetz angeschlossene elektrische Vorrichtung identifiziert worden ist, dann können geeignete Maßnahmen ergriffen werden, um diese Hochfrequenz-Verschmutzung zu beseitigen oder zumindest zu reduzieren. Abhängig von der Art der verschmutzenden bzw. die Hochfrequenzstörung verursachenden elektrischen Vorrichtung können diese Maßnahmen unterschiedlicher Natur sein. Im Falle eines Wechselrichters kann beispielsweise das Modulationsmuster, mit dem die betreffenden Halbleiterschalter angesteuert werden, so modifiziert werden, dass bei einem weiterhin gegebenen Betrieb des Wechselrichters die betreffenden harmonischen hinsichtlich ihrer Intensität schwächer ausfallen und/oder andere harmonische mit einer jeweils möglichst geringen Intensität auftreten. Falls erforderlich kann die betreffende elektrische Vorrichtung bzw. der betreffende Hochfrequenz-Verschmutzer auch ganz abgeschaltet und durch eine andere elektrische Vorrichtung ersetzt werden, welche hoffentlich eine geringere Hochfrequenz-Verschmutzung verursacht.

In diesem Dokument werden anschaulich ausgedrückt eine Referenz-Signatur auch als Verschmutzungssignatur, eine Hochfrequenzstörung auch als Hochfrequenz-Verschmutzung und ein eine Hochfrequenzstörung verursachende elektrische Vorrichtung auch als Hochfrequenz-Verschmutzer bezeichnet. Die charakteristische Signatur wird nachfolgend auch als Fingerabdruck, auf Englisch Fingerprint, bezeichnet. Eine Hochfrequenz-Verschmutzung kann ebenso anschaulich auch als Hochfrequenz-Kontamination bezeichnet werden.

Das beschriebene Erfassen des zeitlichen Verlaufs der elektrischen Messgröße kann beispielsweise durch eine periodische Erfassung von Messdaten eines geeigneten Sensors erfolgen. Abhängig von dem Frequenzbereich der Hochfrequenzstörung sollte dazu eine geeignete Abtastrate bzw. -frequenz verwendet werden. Selbstverständlich sollte der für die Erfassung der Messgröße verwendete Sensor sowie die dem Sensor nachgeschaltete Auswerteelektronik auch entsprechend schnell sein bzw. eine entsprechende hohe Zeitauflösung haben.

Die beschriebene charakteristische Signatur kann jeder beliebige Fingerprint der betreffenden Hochfrequenzstörung sein. Der Fingerprint kann ein charakteristischer Verlauf in der Zeitdomäne und/oder in der Frequenzdomäne sein.

Gemäß einem Ausführungsbeispiel der Erfindung ist die elektrische Messgröße die Spannung an einem Messpunkt des elektrischen Versorgungsnetzes. Dies hat den Vorteil, dass die Hochfrequenzstörung bzw. deren charakteristische Signatur anhand einer einfach zu erfassenden physikalischen Größe erkannt wird.

Gemäß einem weiteren Ausführungsbeispiel der Erfindung weist das Ermitteln der charakteristischen Signatur ein Transformieren des zeitlichen Verlaufs der erfassten elektrischen Messgröße von der Zeitdomäne in die Frequenzdomäne auf. Ein solches Transformieren von der Zeitdomäne in die Frequenzdomäne kann bevorzugt mittels einer Fourier-Transformation (FT) und insbesondere mittels einer schnellen Fourier-Transformation (FFT) erfolgen. Damit kann zur Ermittlung der charakteristischen Signatur auf bekannte mathematische Methoden zurückgegriffen werden, welche auf vielen verschiedenen Gebieten der Technik zum Einsatz kommen und aufgrund ihrer hohen Präzision eine besonders hohe Aussagekraft haben. Damit kann das beschriebene Vergleichen der charakteristischen Signatur mit den verschiedenen Referenz-Signaturen mit einer besonders hohen Genauigkeit durchgeführt werden und die Zuverlässigkeit des beschriebenen Verfahrens wird dahingehend erhöht, dass verhindert wird, dass (a) eine hinsichtlich einer Hochfrequenz-Verschmutzung "saubere" elektrische Vorrichtung fälschlicherweise als Hochfrequenz-Verschmutzer identifiziert und/oder dass (b) ein Hochfrequenz-Verschmutzer nicht erkannt wird.

Gemäß einem weiteren Ausführungsbeispiel der Erfindung ist die charakteristische Signatur in der Frequenzdomäne ein Frequenzspektrum, welches zumindest zwei, bevorzugt zumindest vier und weiter bevorzugt zumindest sechs charakteristische Peaks aufweist.

Eine charakteristische Signatur mit mehreren als Peaks ausgebildeten Strukturen, welche jeweils einer bestimmten Frequenz bzw. einem vergleichsweise schmalen Frequenzband zugeordnet sind, weist eine besonders hohe Signifikanz auf, weil sie vergleichsweise leicht von anderen ähnlichen aber nicht genau gleichen charakteristischen Signaturen unterschieden werden kann. Auch dies trägt zu einer hohen Zuverlässigkeit bei der Identifizierung eines Hochfrequenz-Verschmutzer bei.

Gemäß einem weiteren Ausführungsbeispiel der Erfindung werden Frequenzwerte, an denen die zumindest zwei Peaks in dem Frequenzspektrum auftreten, miteinander in Bezug gesetzt und die daraus resultierende Informationen bei dem Erkennen der Ursache der Hochfrequenzstörung berücksichtigt.

Das beschriebene "in Bezug setzen" und die daraus gewonnenen Informationen können insbesondere bei der Ursachenforschung von Hochfrequenzstörungen behilflich sein, welche von verschiedenen Oberschwingungen einer Grundfrequenz stammen. Insbesondere kann durch das "in Bezug setzen" diese Grundfrequenz identifiziert oder mögliche Werte für diese Grundfrequenz ermittelt werden, so dass es vergleichsweise einfach wird, einen möglichen Hochfrequenz-Verschmutzer zu identifizieren. In diesem Fall ist es nämlich lediglich erforderlich, nach an dem Versorgungsnetz angeschlossenen elektrischen Vorrichtungen zu suchen, welche mit einer solchen (möglichen) Grundfrequenz Arbeiten bzw. getaktet sind.

Das "in Bezug setzen" kann ein Bilden eines Frequenzverhältnisses und/oder ein Berechnen eines Abstandes auf der Frequenzskala umfassen.

Gemäß einem weiteren Ausführungsbeispiel der Erfindung erfolgt das Erkennen des Verursachers der Hochfrequenzstörung unter Berücksichtigung (a) einer vorbekannten Topologie des elektrischen Versorgungsnetzes, (b) der Position eines Messpunkts für das Erfassen der elektrischen Messgröße in Bezug auf die Topologie und (c) von einer vorbekannten Position von zumindest einer an das elektrischen Versorgungsnetz angeschlossenen elektrischen Vorrichtung, welche als Verursacher für die Hochfrequenzstörung in Frage kommt.

Anschaulich ausgedrückt werden bei diesem Ausführungsbeispiel a priori vorhandene Informationen über den Aufstellungsort von zumindest einem möglichen Hochfrequenz-Verschmutzer für die Ursachenerkennung der detektierten Hochfrequenzstörung verwendet. Diese Informationen sind in Bezug auf die Topologie des elektrischen Versorgungsnetzes Ortspositionen, welche indikativ sind für ein Ausstrahlen von Hochfrequenzstörungen, welche von einem Hochfrequenz-Verschmutzer in das elektrische Versorgungsnetz eingekoppelt werden, an die Stelle in der Topologie des elektrischen Versorgungsnetzes, an welcher die elektrische Messgröße erfasst wird. So kann beispielsweise berücksichtigt werden, dass bei einem Messpunkt, welcher einem bestimmten "Ast" in dem elektrischen Versorgungsnetz zugeordnet ist und welcher innerhalb der Topologie des elektrischen Versorgungsnetzes einen engen räumlichen Bezug zu dem betreffenden Messpunkt hat, relativ starke Hochfrequenzstörungen bevorzugt von einem Hochfrequenz-Verschmutzer stammen, welcher sich in diesem "Ast" oder zumindest in der Nähe dieses "Astes" befindet.

Allgemein ausgedrückt wird bei dem hier beschriebenen Ausführungsbeispiel ein Hochfrequenz-Verschmutzer also nicht ausschließlich anhand von seiner charakteristischen Signatur sondern auch basierend auf Lokalisationsinformationen identifiziert. Dies kann auf vorteilhafte Weise dazu beitragen, dass eine mit dem hier beschriebenen Verfahren erkannte Zuordnung zwischen einer bestimmten Hochfrequenzstörung und einem Hochfrequenz-Verschmutzer besonders zuverlässig ist. Dies trägt dazu bei, dass Maßnahmen zur Beseitigung oder zumindest zur Reduzierung von Hochfrequenzstörungen zielgenau an demjenigen elektrischen Verbraucher vorgenommen werden können, welcher auch tatsächlich für die betreffende Hochfrequenz-Verschmutzung verantwortlich ist.

Gemäß einem weiteren Ausführungsbeispiel der Erfindung erfolgt das Erkennen der Ursache der Hochfrequenzstörung unter Berücksichtigung eines Zeitpunktes des Auftretens der Hochfrequenzstörung. Auch dies kann zu einer verbesserten und besonders zuverlässigen Identifizierung eines Hochfrequenz-Verschmutzers führen, weil für viele mögliche Hochfrequenz-Verschmutzer ein bestimmtes zeitliches Betriebsmuster vorbekannt oder zumindest wahrscheinlich ist.

So kann zum Beispiel bei einem Auftreten von Hochfrequenzstörungen, welche zeitlich mit dem Betrieb von zumindest einer elektrischen Vorrichtung korrelieren, beispielsweise dem Beginn und/oder dem Ende des Betriebs der betreffenden Vorrichtung, zumindest mit einer gewissen Wahrscheinlichkeit davon ausgegangen werden, das diese elektrische Vorrichtung der gesuchte Hochfrequenz-Verschmutzer ist. Wenn beispielsweise eine Hochfrequenzstörung zu einer Uhrzeit auftritt, welche mit dem Beginn einer bestimmten Fernsehsendung zusammenfällt, dann ist die Wahrscheinlichkeit besonders hoch, dass es sich bei dem Hochfrequenz-Verschmutzer um ein Fernsehgerät oder eine von dem Betrieb des Fernsehgerätes abhängige andere elektrische Vorrichtung handelt.

In einem derzeit als besonders interessant eingestuften Anwendungsfall handelt es sich bei dem Hochfrequenz-Verschmutzer um einen Wechselrichter, welcher einem regenerativen Energie-Einspeiser zugeordnet bzw. nachgeschaltet ist, welcher in der Topologie des elektrischen Versorgungsnetzes dezentral angeordnet ist. Sofern der Betreiber des Energie-Einspeisers zumindest eine gewisse Kenntnis davon hat, zu welcher Tageszeit der Wechselrichter in Betrieb genommen wird, können auch diese zeitlichen Information verwendet werden, um die Zuverlässigkeit bei der Identifizierung eines Hochfrequenz-Verschmutzer zu verbessern.

Gemäß einem weiteren Ausführungsbeispiel der Erfindung werden die in der Datenbank hinterlegten Referenz-Signaturen insbesondere durch einen Rückgriff auf externe Daten aktualisiert und/oder ergänzt.

Anschaulich ausgedrückt kann die Datenbasis der in der Datenbank hinterlegten Daten durch ein Sammeln von verschiedenen Referenz-Signaturen (und deren Zuordnung zu jeweils einer bestimmten elektrischen Vorrichtung) verbreitert werden. Damit kann die Anzahl an möglichen Hochfrequenz-Verschmutzern, welche mit dem hier beschriebenen Verfahren zuverlässig werden können, ständig erhöht werden. Außerdem können Referenz-Signaturen, welches sich als ungeeignet für eine Identifizierung von Hochfrequenz-Verschmutzern herausgestellt haben, aus der Datenbasis entfernt und damit die Zuverlässigkeit des beschriebenen Verfahrens weiter erhöht werden.

Das "Pflegen" der in der Datenbank hinterlegten Referenz-Signaturen kann abhängig von dem jeweiligen Anwendungsfall ein Hinzufügen und/oder ein Löschen von Referenzsignaturen umfassen. Dabei kann die "Datenbankpflege" basierend auf einem Lernalgorithmus insbesondere mit Erkenntnissen im Zusammenhang mit der Ursachenforschung innerhalb des beschriebenen elektrischen Versorgungsnetzes erfolgen. Alternativ oder in Kombination können auch entsprechende Daten von anderen elektrischen Versorgungsnetzen eingepflegt und/oder eingelernt werden. Hinsichtlich der Menge an Daten, welche für die "Datenbankpflege" verwendet werden, sind keine grundsätzlichen Grenzen gesetzt. Das beschriebene Verfahren kann also auch basierend auf Daten aus einem "Big Data" Datenpool verbessert werden.

Erfindungsgemäß liegen die Hochfrequenzstörungen innerhalb eines Frequenzbereiches, der (a) oberhalb von 2 kHz, insbesondere oberhalb von 5 kHz und weiter insbesondere oberhalb von 10 kHz liegt und insbesondere (b) unterhalb von 1000 kHz, insbesondere unterhalb von 500 kHz und weiter insbesondere unterhalb von 150 kHz liegt.

Damit werden mit dem in diesem Dokument beschriebenen Verfahren elektrische Verschmutzungen oberhalb eines mit bekannten Methoden und unter Berücksichtigung der bekannten internationalen Norm IEC 61000-4-7 bereits vergleichsweise gut überwachten Frequenzbereichs erkannt. So können mit dem beschriebenen Verfahren beispielsweise Hochfrequenzstörungen in einem Bereich bis 150 kHz, welche für viele elektrische Geräte kritisch ist, erkannt und deren Ursache(n) identifiziert werden. Durch eine der Identifizierung von solchen Hochfrequenz-Verschmutzern nachfolgende spezifische Bekämpfung der Hochfrequenz-Verschmutzung können schwerwiegende Folgen an empfindlichen Netzkomponenten bzw. an Endverbrauchern, die an dem Versorgungsnetz angebundenen sind, vermieden werden.

Gemäß einem weiteren Ausführungsbeispiel der Erfindung umfasst die Referenz-Vorrichtung eine Mehrzahl von elektrischen Referenz-Untervorrichtungen. Dadurch können mit dem beschriebenen Verfahren innerhalb bzw. mit einer einzigen Erkennungsroutine gleichzeitig mehrere elektrische Verschmutzer identifiziert werden. Dies kann insbesondere für elektrische Systeme von Vorteil sein, die mehrere elektrische Vorrichtungen bzw. "Untervorrichtungen" umfassen, die in der Praxis bevorzugt gemeinsam betrieben werden und die demzufolge als ein übergeordneter Hochfrequenz-Verschmutzer betrachtet werden können. Dabei können die verschiedenen elektrischen "Untervorrichtungen" in dem gleichen Frequenzbereich bzw. mit gleichen charakteristischen Frequenzen oder alternativ in unterschiedlichen Frequenzbereichen bzw. mit zueinander unterschiedlichen charakteristischen Frequenzen die (unerwünschten) Hochfrequenzstörungen verursachen.

Gemäß einem weiteren Ausführungsbeispiel der Erfindung wird beim Auswählen einer Referenz-Signatur die Ähnlichkeit zwischen der charakteristischen Signatur und der betreffenden Referenz-Signatur durch eine Differenzbildung zwischen der charakteristischen Signatur und der betreffenden Referenz-Signatur ausgewertet.

Durch eine Differenzbildung kann auf einfache Weise ein Vergleich zwischen der charakteristischen Signatur und der betreffenden Referenz-Signatur vorgenommen werden. Dabei kann insbesondere für den Fall, dass die beiden Signaturen in Bezug auf ihre Intensität bzw. ihre Stärke unterschiedlich sind, eine Signatur in Bezug auf die andere auf geeignete Weise skaliert werden, so dass in die Differenzbildung lediglich der charakteristische Form der Signaturen und nicht deren Stärke eingeht.

Gemäß einem weiteren Aspekt der Erfindung wird ein Verfahren zum Reduzieren einer Hochfrequenzstörung in einem elektrischen Versorgungsnetz beschrieben, an welchem mehrere elektrische Vorrichtungen angeschlossen sind. Das beschriebene Verfahren weist auf (a) ein Durchführen des Verfahrens gemäß einem der vorangehenden Ansprüche; und (b) ein Verändern des Betriebszustands der als Ursache identifizierten elektrischen Vorrichtung, so dass eine Intensität der Hochfrequenzstörung reduziert wird.

Dem beschriebenen Verfahren zum Reduzieren einer Hochfrequenzstörung liegt die Erkenntnis zugrunde, dass nach einer Identifizierung einer elektrischen Vorrichtung als Hochfrequenz-Verschmutzer gezielt die von dieser Vorrichtung in das elektrische Versorgungsnetz eingekoppelte Hochfrequenzstörung bzw. Hochfrequenz-Verschmutzung durch eine geeignete Einstellung zumindest eines Betriebsparameters dieser Vorrichtung verändert und insbesondere reduziert werden kann. Dabei kann der zumindest eine Betriebsparameter von dem Typ der betreffenden Vorrichtung abhängen. Ein Nutzer bzw. ein Betreiber einer als Hochfrequenz-Verschmutzer in Frage kommenden Vorrichtung wird jedoch wissen, welche Betriebsparameter er verändern muss, um das Einkoppeln von Hochfrequenz-Verschmutzung in das elektrische Versorgungsnetz zu verändern.

Es wird darauf hingewiesen, dass unter dem Verändern des Betriebszustands auch verstanden werden kann, dass die betreffende elektrische Vorrichtung einfach ausgeschalten bzw. vom Netz genommen wird.

Es wird ferner darauf hingewiesen, dass ein Reduzieren der Hochfrequenzstörung auch nach dem Prinzip von "Try and Error" möglich ist. Dabei wird nach einem Durchführen des vorstehend beschriebenen Verfahrens zum Erkennen der Ursache einer Hochfrequenzstörung zumindest ein Betriebsparameter der betreffenden elektrischen Vorrichtung verändert und danach bewertet, ob sich die Intensität der Hochfrequenzstörung verändert hat. Ist dies nicht der Fall, wird der Betriebsparameter in eine andere Richtung verändert und/oder ein anderer Betriebsparameter wird verändert, bis eine Reduzierung der Hochfrequenz-Verschmutzung erreicht ist.

Gemäß einem weiteren Aspekt der Erfindung wird eine Vorrichtung zum Erkennen der Ursache einer Hochfrequenzstörung in einem elektrischen Versorgungsnetz beschrieben, an welchem mehrere elektrische Vorrichtungen angeschlossen sind, wobei die Hochfrequenzstörung innerhalb eines Frequenzbereiches liegt, der oberhalb von 2kHz und unterhalb von 1000 kHz liegt. Die beschriebene Vorrichtung weist auf (A) einen Sensor zum Erfassen eines zeitlichen Verlaufs einer elektrischen Messgröße des elektrischen Versorgungsnetzes; (B) eine dem Sensor nachgeschaltete Datenverarbeitungseinrichtung zum Empfangen und Verarbeiten von Messwerten, die von dem Sensor erfasst worden sind und für die elektrische Messgröße indikativ sind; und (C) eine mit der Datenverarbeitungseinrichtung gekoppelte Datenbank, in welcher eine Mehrzahl von Referenz-Signaturen hinterlegt sind. Jeweils eine Referenz-Signatur ist einer Referenz-Hochfrequenzstörung zugeordnet, die (i) von einer sich im Betrieb befindlichen elektrischen Referenz-Vorrichtung verursacht wird und (ii) auf das elektrische Versorgungsnetz übertragbar ist. Die Datenverarbeitungseinrichtung ist programmtechnisch eingerichtet zum (a) Ermitteln einer charakteristischen Signatur der elektrischen Messgröße, wobei die charakteristische Signatur indikativ ist für die Hochfrequenzstörung; (b) Vergleichen der charakteristischen Signatur mit zumindest einer Auswahl der Mehrzahl von Referenz-Signaturen; (c) Auswählen einer Referenz-Signatur, welche mit der charakteristischen Signatur die größte Ähnlichkeit hat; und (d) Erkennen der Ursache der Hochfrequenzstörung, wobei diejenige der mehreren angeschlossenen elektrischen Vorrichtungen als Ursache identifiziert wird, welche hinsichtlich ihres Typs derjenigen elektrischen Referenz-Vorrichtung entspricht, welcher die ausgewählte Referenz-Signatur zugeordnet ist.

Auch der beschriebenen Vorrichtung liegt die Erkenntnis zugrunde, dass durch einen Vergleich einer basierend auf Messwerten ermittelten charakteristischen Signatur einer Hochfrequenzstörung mit einer Mehrzahl von Referenz-Signaturen, die jeweils einem potentiellen Hochfrequenz-Verschmutzer zugeordnet sind, der Verursacher der Hochfrequenzstörung eindeutig identifiziert werden kann.

Die beschriebene Vorrichtung kann durch Durchführen eines beliebigen vorstehend beschriebenen Verfahrens verwendet werden.

Gemäß einem weiteren Aspekt der Erfindung wird beschrieben ein Computerprogramm zum Erkennen der Ursache einer Hochfrequenzstörung in einem elektrischen Versorgungsnetz, an welchem mehrere elektrische Vorrichtungen angeschlossen sind. Das Computerprogramm ist, wenn es von einem Prozessor ausgeführt wird, zum Durchführen des vorstehend beschriebenen Verfahrens eingerichtet.

Im Sinne dieses Dokuments ist die Nennung eines solchen Computerprogramms gleichbedeutend mit dem Begriff eines Programm-Elements, eines Computerprogrammprodukts und/oder eines computerlesbaren Mediums, das Anweisungen zum Steuern eines Computersystems enthält, um die Arbeitsweise eines Systems bzw. eines Verfahrens in geeigneter Weise zu koordinieren, um die mit dem erfindungsgemäßen Verfahren verknüpften Wirkungen zu erreichen.

Das Computerprogramm kann als computerlesbarer Anweisungscode in jeder geeigneten Programmiersprache wie beispielsweise in JAVA, C++ etc. implementiert sein. Das Computerprogramm kann auf einem computerlesbaren Speichermedium (CD-Rom, DVD, Blueray Disk, Wechsellaufwerk, flüchtiger oder nicht-flüchtiger Speicher, eingebauter Speicher/Prozessor etc.) abgespeichert sein. Der Anweisungscode kann einen Computer oder andere programmierbare Geräte derart programmieren, dass die gewünschten Funktionen ausgeführt werden. Ferner kann das Computerprogramm in einem Netzwerk wie beispielsweise dem Internet bereitgestellt werden, von dem es bei Bedarf von einem Nutzer herunter geladen werden kann.

Es wird darauf hingewiesen, dass das in diesem Dokument beschriebene Verfahren auch unter Verwendung eines "CLOUD" Netzes mit entsprechenden virtuellen Speicherplätzen und entsprechender virtuelle Rechenkapazität durchgeführt werden kann.

Die Erfindung kann sowohl mittels eines Computerprogramms, d.h. einer Software, als auch mittels einer oder mehrerer spezieller elektronischer Schaltungen, d.h. in Hardware oder in beliebig hybrider Form, d.h. mittels Software-Komponenten und Hardware-Komponenten, realisiert werden.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieser Anmeldung sind lediglich als schematisch und als nicht maßstabsgetreu anzusehen.
- Figur 1: zeigt die Architektur eines Stromnetzes mit insgesamt vier Spannungsebenen und mehreren Vorrichtungen zum Erkennen der Ursache einer Hochfrequenzstörung in jeweils einem einer bestimmten Spannungsebene zugeordneten elektrischen Versorgungsnetz.
- Figur 2: zeigt eine beispielhafte charakteristische Signatur einer Hochfrequenzstörung, welche in einem Mittelspannungsnetz auftreten kann.
- Figur 3: zeigt eine beispielhafte charakteristische Signatur einer Hochfrequenzstörung, welche in einem Niederspannungsnetz an einer Ladestation für ein Elektrofahrzeug auftreten kann.

Es wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

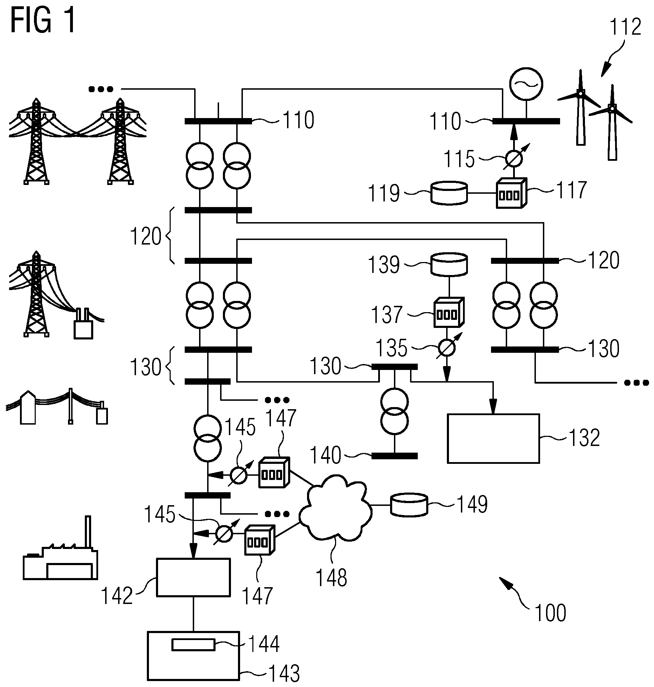

Figur 1 zeigt die die Architektur eines Stromnetzes 100, welches ein übergeordnetes Übertragungsnetz 110, ein Übertragungsnetz 120, ein Verteilungsnetz 130 sowie ein Feinverteilungsnetz 140 aufweist. Jedes dieser Netze 110, 120, 130 und 140 ist in bekannter Weise einer unterschiedlichen Spannungsebene zugeordnet. In diesem Zusammenhang wird das übergeordnete Übertragungsnetz auch als Höchstspannungsnetz 110, das Übertragungsnetz auch als Hochspannungsnetz 120, das Verteilungsnetz auch als Mittelspannungsnetz 130 und das Feinverteilungsnetz auch als Niederspannungsnetz 140 bezeichnet. Die unterschiedlichen Spannungsebenen zugeordneten Netze sind in ebenfalls bekannter Weise durch geeignete Trafostationen miteinander gekoppelt.

Gemäß dem hier dargestellten Ausführungsbeispiel sorgt ein Windpark 112 für eine Erzeugung und eine Einspeisung von elektrischer Energie in das Höchstspannungsnetz 110. Selbstverständlich können auch andere Arten von Kraftwerken elektrische Energie erzeugen und in das Höchstspannungsnetz 110 einspeisen. Auch eine Energieeinspeisung, insbesondere von regenerativen Stromerzeugern, in andere Spannungsebenen ist möglich.

An dem Mittelspannungsnetz 130 sind eine Mehrzahl von elektrischen Lasten angeschlossen, wobei in Figur 1 lediglich eine Last 132 schematisch dargestellt ist. Die Last 132 kann insbesondere einem Industriebetrieb zugeordnet sein, welcher einen vergleichsweise großen Strombedarf hat.

Auch an dem Niederspannungsnetz 140 sind eine Mehrzahl von elektrischen Lasten angeschlossen. Aus Gründen der Übersichtlichkeit ist in Figur 1 lediglich eine Last 142 dargestellt. Diese Last 142 ist gemäß dem hier dargestellten Ausführungsbeispiel eine Ladestation für ein Elektrofahrzeug. Die Ladestation 142 bezieht elektrische Energie von dem Niederspannungsnetz 140. Alternativ oder in Kombination kann die Ladestation 142 auch mit elektrischer Energie versorgt werden, welche, abhängig von der Sonneneinstrahlung, von einer in Bezug auf die gesamten Netzarchitektur dezentral angeordneten Photovoltaikanlage 143 bereitgestellt wird. Ein Wechselrichter 144 der Photovoltaikanlage 143 sorgt in bekannter Weise dafür, dass der von der Photovoltaikanlage 143 bereitgestellte elektrische Strom ein Wechselstrom mit einer Frequenz ist, welche genau der Frequenz des Niederspannungsnetzes 140 entspricht.

Der Wechselrichter 144 weist in bekannter Weise unter anderem einen DC-AC Konverter auf, der eine Schaltung mit mehreren elektrischen Brücken umfasst, wobei jeweils eine Brücke einer Phase des Niederspannungsnetzes 140 zugeordnet ist. Jede elektrische Brücke umfasst zumindest zwei IGBT-Halbleiterschaltelemente, welche bei einer bestimmten Grundfrequenz mit einer geeigneten Pulsweitenmodulation betrieben werden und dafür sorgen, dass an dem Ausgang des Wechselrichters 144 ein Spannungsverlauf erzeugt wird, der in guter Näherung einen sinusförmigen Verlauf mit einer Frequenz von beispielsweise 50Hz hat. Abhängig von dem Typ des Wechselrichters kann diese Grundfrequenz in einem Frequenzbereich von beispielsweise 1kHz bis 50kHz, bevorzugt zwischen 10kHz und 50kHz, liegen.

Die Taktung der IGBT-Halbleiterschaltelemente mit einer solchen Grundfrequenz verursacht in bekannter Weise Hochfrequenzstörungen, welche auf das Niederspannungsnetz 140 einwirken und den Betrieb von anderen (nicht dargestellten) elektrischen Geräten beeinträchtigen können, welche ebenfalls an dem Niederspannungsnetz 140 angeschlossen sind.

Die von einem Wechselrichter verursachten Hochfrequenzstörungen umfassen jedoch typischerweise nicht nur eine einzige Frequenz, die der Grundfrequenz entspricht. Vielmehr entstehen stets durch nichtlineare Effekte eine Vielzahl von Oberschwingungen bzw. Harmonischen, welche zu einem Frequenzspektrum führen, welches eine entsprechende Vielzahl von Frequenzanteilen aufweist.

Der Erfinder der in diesem Dokument beschriebenen Erfindung hat erkannt, dass ein Frequenzspektrum typischerweise signifikant bzw. charakteristisch für den jeweiligen Typ von Wechselrichter ist. Ferner wurde erkannt, dass dies nicht nur für Wechselrichter sondern für eine Vielzahl von anderen elektrischen Geräten bzw. elektrischen Vorrichtungen gilt, welche an einem elektrischen Netz angeschlossen sind und zumindest eine gewisse Nichtlinearität aufweisen. Daher kann der Verursacher einer aktuell auf einem elektrischen Netz vorhandenen Hochfrequenzstörung anhand einer charakteristischen Signatur dadurch identifiziert werden, dass diese Signatur mit einer Mehrzahl von Referenz-Signaturen verglichen wird, welche jeweils für ein bestimmtes elektrisches Gerät indikativ sind und in einer geeigneten Datenbank abgelegt sind. Gemäß dem hier dargestellten Ausführungsbeispiel ist die charakteristische Signatur sowie sind die Referenz-Signaturen Frequenzspektren.

Zur Zuordnung einer Hochfrequenzstörung zu einem sog. Hochfrequenz-Verschmutzer wird gemäß dem hier dargestellten Ausführungsbeispiel mittels eines Sensors 145 mit einer hohen Zeitauflösung der zeitliche Verlauf der Spannung des Niederspannungsnetzes 140 abgetastet. Die entsprechende zeitliche Abfolge an Spannungsmesswerten wird an eine Datenverarbeitungseinrichtung 147 übergeben, welche eine (schnelle) Fourier-Transformation durchführt und den gemessenen zeitlichen Verlauf der Spannung in ein Frequenzspektrum transformiert. Außerdem greift die Datenverarbeitungseinrichtung 147 auf eine Datenbank 149 zu, in welcher die Mehrzahl von Referenz-Signaturen gespeichert bzw. abgelegt sind. Die Datenverarbeitungseinrichtung 147 ermittelt dann diejenige Referenz-Signatur, welche der durch die Fourier-Transformation ermittelten charakteristischen Signatur am ähnlichsten ist und ordnet die Hochfrequenzstörung einer entsprechenden elektrischen Vorrichtung zu.

Gemäß dem hier dargestellten Ausführungsbeispiel ist die Datenverarbeitungseinrichtung 147 nicht direkt mit der Datenbank 149 verbunden. Die Datenübertragung zwischen der Datenbank 149 und der Datenverarbeitungseinrichtung 147 erfolgt über ein Netzwerk 148, beispielsweise dem Internet.

Die Erfassung der Spannungswerte des Niederspannungsnetzes 140 kann an verschiedenen Messpunkten stattfinden. Dies ist in Figur 1 dadurch illustriert, dass zwei verschiedene Sensoren 145 mit jeweils einer nachgeschalteten Datenverarbeitungseinrichtung 147 dargestellt sind.

Das hier beschriebene Konzept zum Identifizieren von Hochfrequenz-Verschmutzern kann auch bei elektrischen Netzen angewendet werden, welche höheren Spannungsebenen zugeordnet sind. Dies ist in Figur 1 anhand zweier entsprechender Vorrichtungen zum Erkennen der Ursache einer Hochfrequenzstörung illustriert, wobei eine Vorrichtung dem Mittelspannungsnetz 130 und die andere Vorrichtung dem Höchstspannungsnetz 110 zugeordnet ist. Die dem Mittelspannungsnetz 130 zugeordnete Vorrichtung umfasst einen Sensor 135, eine dem Sensor 135 nachgeschaltete Datenverarbeitungseinrichtung 137 sowie eine mit der Datenverarbeitungseinrichtung 137 in Kommunikation stehende Datenbank 139. Die dem Mittelspannungsnetz 110 zugeordnete Vorrichtung umfasst in entsprechender Weise einen Sensor 115, eine Datenverarbeitungseinrichtung 117 sowie eine Datenbank 119.

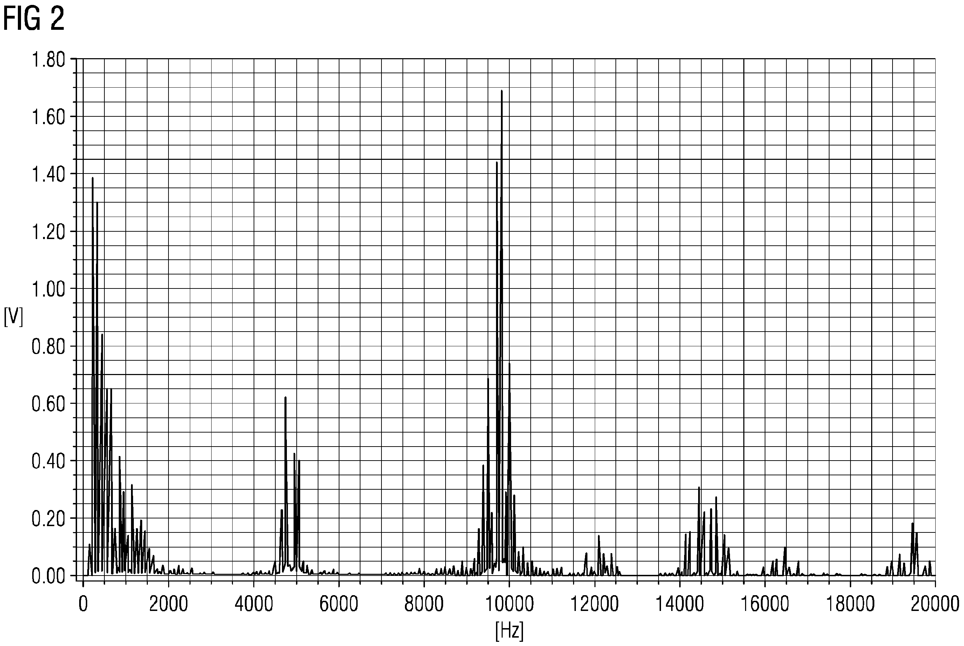

Figur 2 zeigt das Frequenzspektrum der charakteristischen Signatur einer Hochfrequenz-Verschmutzung, welche an dem Mittelspannungsnetz 130 auftreten kann.

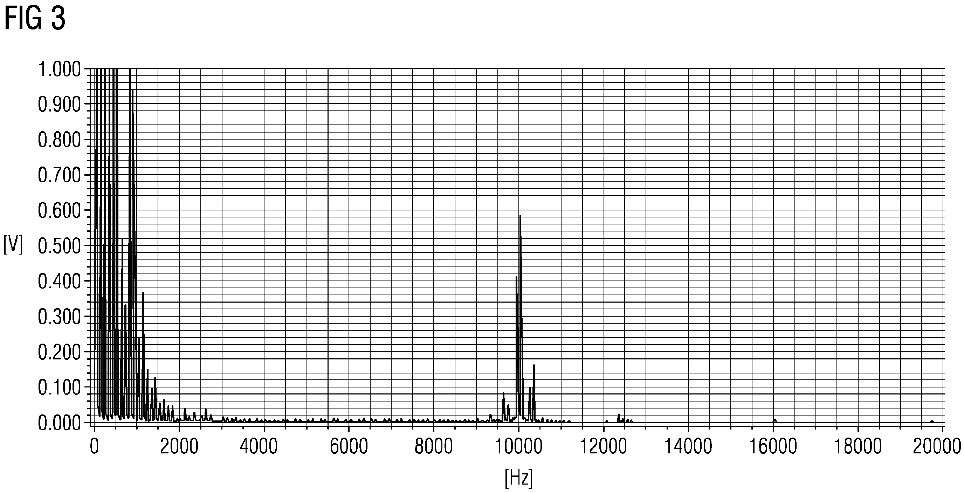

Figur 3 zeigt das Frequenzspektrum der charakteristischen Signatur einer beispielhaften Hochfrequenzstörung in einem Niederspannungsnetz. Die in Figur 3 dargestellte charakteristische Signatur stammt von dem Wechselrichter einer Photovoltaikanlage für eine Ladestation für Elektrofahrzeuge.

Die in diesem Dokument beschriebenen Ausführungsformen der Erfindung können in anschaulichen Worten wie folgt zusammengefasst werden:
Zur Identifizierung von Hochfrequenz-Verschmutzern werden Referenz-Signaturen bzw. sog. "Hochfrequenz Fingerabdrücke" möglichen Verursachern von Hochfrequenz-Verschmutzung mittels einer Mustererkennung zuordnet und somit ein Profil erstellt. Diese Profile werden in einer Datenbank hinterlegt und ermöglichen zukünftig bei auftretenden Hochfrequenzstörungen anhand ihrer charakteristischen Signaturen bzw. Frequenzspektren schnell und effektiv den jeweils aktuellen Verursacher zu identifizieren. Bei einer Berücksichtigung des Messpunktes der Hochfrequenzstörung kann auch innerhalb der Topologie des betreffenden elektrischen Versorgungsnetzes eine Ortung stattfinden.

Bei dem hier beschriebenen Verfahren können Datenmodelle der Aufzeichnungen vom FFT Spektren von Spannungs- bzw. Stromsignalen und zeitlich erfassten Netzereignissen (möglicher Verursachern) in Korrelation gebracht werden. Über eine Mustererkennung kann das FFT Spektrum dann in der Regel eindeutig einem bestimmten Verschmutzer zugordnet und dieser auf Grund von zusätzlich hinterlegten topologischen Informationen lokalisiert werden. Nach einer Identifizierung eines Hochfrequenz-Verschmutzers basierend auf einer solchen Mustererkennung können die Ursachen von einer Vielzahl von Hochfrequenzstörungen durch geeignete Maßnahmen zielgerichtet behoben und damit die Netzhygiene in Bezug auf Hochfrequenz-Verschmutzung auf einfache und effektive Weise verbessert werden.

### Bezugszeichenliste

- 100: Stromnetz
- 110: Höchstspannungsnetz / übergeordnetes Übertragungsnetz
- 112: Windpark
- 115: Sensor
- 117: Datenverarbeitungseinrichtung
- 119: Datenbank
- 120: Hochspannungsnetz / Übertragungsnetz
- 130: Mittelspannungsnetz / Verteilungsnetz
- 132: Last
- 135: Sensor
- 137: Datenverarbeitungseinrichtung
- 139: Datenbank
- 140: Niederspannungsnetz / Feinverteilungsnetz
- 142: Last / Ladestation
- 143: Photovoltaikanlage
- 144: Wechselrichter

- 145: Sensor
- 147: Datenverarbeitungseinrichtung
- 148: Netzwerk
- 149: Datenbank

## Patentansprüche

1. Verfahren zum Identifizieren einer elektrischen Vorrichtung, die eine Hochfrequenzstörung in einem elektrischen Versorgungsnetz (130, 140), an welchem mehrere elektrische Vorrichtungen (132, 142) angeschlossen sind, verursacht, wobei die Hochfrequenzstörung innerhalb eines Frequenzbereiches liegt, der oberhalb von 2kHz und unterhalb von 1000 kHz liegt, das Verfahren aufweisend
Erfassen eines zeitlichen Verlaufs einer elektrischen Messgröße des elektrischen Versorgungsnetzes;
Ermitteln einer charakteristischen Signatur der elektrischen Messgröße, wobei die charakteristische Signatur indikativ ist für die Hochfrequenzstörung;
Vergleichen der charakteristischen Signatur mit einer Mehrzahl von in einer Datenbank (139, 149) hinterlegten Referenz-Signaturen, wobei jeweils eine Referenz-Signatur einer Referenz-Hochfrequenzstörung zugeordnet ist, die
(i) von einer sich im Betrieb befindlichen elektrischen Referenz-Vorrichtung verursacht wird und
(ii) auf das elektrische Versorgungsnetz (130, 140) übertragbar ist;
Auswählen einer Referenz-Signatur, welche mit der charakteristischen Signatur die größte Ähnlichkeit hat; und
Identifizieren des Verursachers der Hochfrequenzstörung, wobei diejenige der mehreren angeschlossenen elektrischen Vorrichtungen (132, 142) als Verursacher identifiziert wird, welche hinsichtlich ihres Typs derjenigen elektrischen Referenz-Vorrichtung entspricht, welcher die ausgewählte Referenz-Signatur zugeordnet ist.

2. Verfahren gemäß dem vorangehenden Anspruch,
wobei die elektrische Messgröße die Spannung an einem Messpunkt des elektrischen Versorgungsnetzes ist.

3. Verfahren gemäß einem der vorangehenden Ansprüche, wobei das Ermitteln der charakteristischen Signatur ein Transformieren des zeitlichen Verlaufs der erfassten elektrischen Messgröße von der Zeitdomäne in die Frequenzdomäne aufweist.

4. Verfahren gemäß dem vorangehenden Anspruch, wobei die charakteristische Signatur in der Frequenzdomäne ein Frequenzspektrum ist, welches zumindest zwei charakteristische Peaks aufweist.

5. Verfahren gemäß Anspruch 3, wobei die charakteristische Signatur in der Frequenzdomäne ein Frequenzspektrum ist, welches zumindest vier charakteristische Peaks aufweist.

6. Verfahren gemäß Anspruch 3, wobei die charakteristische Signatur in der Frequenzdomäne ein Frequenzspektrum ist, welches zumindest sechs charakteristische Peaks aufweist.

7. Verfahren gemäß einem der vorangehenden Ansprüche 4 bis 6, wobei
Frequenzwerte, an denen die zumindest zwei Peaks in dem Frequenzspektrum auftreten, miteinander in Bezug gesetzt werden und die daraus resultierende Informationen bei dem Erkennen der Ursache der Hochfrequenzstörung berücksichtigt werden.

8. Verfahren gemäß einem der vorangehenden Ansprüche, wobei das Erkennen des Verursachers der Hochfrequenzstörung erfolgt unter Berücksichtigung
(a) einer vorbekannten Topologie des elektrischen Versorgungsnetzes (130, 140),
(b) der Position eines Messpunkts für das Erfassen der elektrischen Messgröße in Bezug auf die Topologie und
(c) von einer vorbekannten Position von zumindest einer an das elektrischen Versorgungsnetz (130, 140) angeschlossenen elektrischen Vorrichtung (132, 142), welche als Verursacher für die Hochfrequenzstörung in Frage kommt.

9. Verfahren gemäß einem der vorangehenden Ansprüche, wobei das Erkennen der Ursache der Hochfrequenzstörung erfolgt unter Berücksichtigung eines Zeitpunktes des Auftretens der Hochfrequenzstörung.

10. Verfahren gemäß einem der vorangehenden Ansprüche, wobei die in der Datenbank (139, 149) hinterlegten Referenz-Signaturen durch einen Rückgriff auf externe Daten aktualisiert und/oder ergänzt werden.

11. Verfahren gemäß einem der vorangehenden Ansprüche, wobei die Referenz-Vorrichtung eine Mehrzahl von elektrischen Referenz-Untervorrichtungen umfasst.

12. Verfahren gemäß einem der vorangehenden Ansprüche, wobei beim Auswählen einer Referenz-Signatur die Ähnlichkeit zwischen der charakteristischen Signatur und der betreffenden Referenz-Signatur durch eine Differenzbildung zwischen der charakteristischen Signatur und der betreffenden Referenz-Signatur ausgewertet wird.

13. Verfahren zum Reduzieren einer Hochfrequenzstörung in einem elektrischen Versorgungsnetz (130, 140), an welchem mehrere elektrische Vorrichtungen (132, 142) angeschlossen sind, das Verfahren aufweisend
Durchführen des Verfahrens gemäß einem der vorangehenden Ansprüche; und
Verändern des Betriebszustands der als Ursache identifizierten elektrischen Vorrichtung (132, 142), so dass eine Intensität der Hochfrequenzstörung reduziert wird.

14. Vorrichtung zum Erkennen der Ursache einer Hochfrequenzstörung in einem elektrischen Versorgungsnetz (130, 140), an welchem mehrere elektrische Vorrichtungen (132, 142) angeschlossen sind, wobei die Hochfrequenzstörung innerhalb eines Frequenzbereiches liegt, der oberhalb von 2kHz und unterhalb von 1000 kHz liegt, die Vorrichtung aufweisend
einen Sensor (135, 145) zum Erfassen eines zeitlichen Verlaufs einer elektrischen Messgröße des elektrischen Versorgungsnetzes (130, 140);
eine dem Sensor (135, 145) nachgeschaltete Datenverarbeitungseinrichtung (137, 147) zum Empfangen und Verarbeiten von Messwerten, die von dem Sensor (135, 145) erfasst worden sind und für die elektrische Messgröße indikativ sind; und
eine mit der Datenverarbeitungseinrichtung (137, 147) gekoppelten Datenbank (139, 149), in welcher eine Mehrzahl von Referenz-Signaturen hinterlegt sind, wobei jeweils eine Referenz-Signatur einer Referenz-Hochfrequenzstörung zugeordnet ist, die (i) von einer sich im Betrieb befindlichen elektrischen Referenz-Vorrichtung verursacht wird und (ii) auf das elektrische Versorgungsnetz (130, 140) übertragbar ist; wobei
die Datenverarbeitungseinrichtung (137, 147) programmtechnisch eingerichtet ist zum
(a) Ermitteln einer charakteristischen Signatur der elektrischen Messgröße, wobei die charakteristische Signatur indikativ ist für die Hochfrequenzstörung;
(b) Vergleichen der charakteristischen Signatur mit zumindest einer Auswahl der Mehrzahl von Referenz-Signaturen;
(c) Auswählen einer Referenz-Signatur, welche mit der charakteristischen Signatur die größte Ähnlichkeit hat; und
(d) Erkennen der Ursache der Hochfrequenzstörung, wobei diejenige der mehreren angeschlossenen elektrischen Vorrichtungen (132, 142) als Ursache identifiziert wird, welche hinsichtlich ihres Typs derjenigen elektrischen Referenz-Vorrichtung entspricht, welcher die ausgewählte Referenz-Signatur zugeordnet ist.

15. Computerprogramm zum Erkennen der Ursache einer Hochfrequenzstörung in einem elektrischen Versorgungsnetz (130, 140), an welchem mehrere elektrische Vorrichtungen (132, 142) angeschlossen sind, wobei das Computerprogramm, wenn es von einem Prozessor (137, 147) ausgeführt wird, zum Durchführen des Verfahrens gemäß einem der Ansprüche 1 bis 13 eingerichtet ist.

## Claims

1. Method for identifying an electrical apparatus which causes a high-frequency disturbance in an electrical supply network (130, 140), to which several electrical apparatuses (132, 142) are connected, wherein the high-frequency disturbance is within a frequency range above 2 kHz and below 1000 kHz, the method comprising
detecting a time profile of an electrical measurement variable of the electrical supply network;
determining a characteristic signature of the electrical measurement variable, wherein the characteristic signature is indicative of the high-frequency disturbance;
comparing the characteristic signature with a plurality of reference signatures stored in a database (139, 149), wherein in each case one reference signature is associated with one reference high-frequency disturbance, which
(i) is caused by an operational electrical reference apparatus and
(ii) can be transmitted to the electrical supply network (130, 140) ;
selecting a reference signature having the greatest similarity to the characteristic signature; and
identifying the originator of the high-frequency disturbance, wherein that electrical apparatus of the several connected electrical apparatuses (132, 142) that corresponds in terms of its type to that electrical reference apparatus with which the selected reference signature is associated is identified as the originator.

2. Method according to the preceding claim,
wherein the electrical measurement variable is the voltage at a measurement point of the electrical supply network.

3. Method according to one of the preceding claims, wherein the determination of the characteristic signature comprises transforming the time profile of the detected electrical measurement variable from the time domain to the frequency domain.

4. Method according to the preceding claim, wherein the characteristic signature in the frequency domain is a frequency spectrum having at least two characteristic peaks.

5. Method according to Claim 3, wherein the characteristic signature in the frequency domain is a frequency spectrum having at least four characteristic peaks.

6. Method according to Claim 3, wherein the characteristic signature in the frequency domain is a frequency spectrum having at least six characteristic peaks.

7. Method according to one of the preceding Claims 4 to 6, wherein frequency values at which the at least two peaks in the frequency spectrum occur are correlated with one another and the resulting information is taken into account in the detection of the cause of the high-frequency disturbance.

8. Method according to one of the preceding claims, wherein the detection of the originator of the high-frequency disturbance takes place by taking into consideration
(a) a previously known topology of the electrical supply network (130, 140),
(b) the position of a measurement point for the detection of the electrical measurement variable in relation to the topology and
(c) a previously known position of at least one electrical apparatus (132, 142) which is connected to the electrical supply network (130, 140) and possibly considered to be the originator for the high-frequency disturbance.

9. Method according to one of the preceding claims, wherein the detection of the cause of the high-frequency disturbance takes place by taking into consideration a time at which the high-frequency disturbance occurs.

10. Method according to one of the preceding claims, wherein the reference signatures stored in the database (139, 149) are updated and/or expanded by recourse to external data.

11. Method according to one of the preceding claims, wherein the reference apparatus comprises a plurality of electrical reference subordinate apparatuses.

12. Method according to one of the preceding claims, wherein, when selecting a reference signature, the similarity between the characteristic signature and the relevant reference signature is evaluated by forming the difference between the characteristic signature and the relevant reference signature.

13. Method for reducing a high-frequency disturbance in an electrical supply network (130, 140), to which several electrical apparatuses (132, 142) are connected, the method comprising
carrying out the method according to one of the preceding claims; and
changing the operating state of the electrical apparatus (132, 142) identified as the cause so that an intensity of the high-frequency disturbance is reduced.

14. Apparatus for detecting the cause of a high-frequency disturbance in an electrical supply network (130, 140), to which several electrical apparatuses (132, 142) are connected, wherein the high-frequency disturbance is within a frequency range above 2 kHz and below 1000 kHz, the apparatus comprising a sensor (135, 145) for detecting a time profile of an electrical measurement variable of the electrical supply network (130, 140);
a data processing device (137, 147) connected downstream of the sensor (135, 145) for receiving and processing measurement values that have been detected by the sensor (135, 145) and that are indicative of the electrical measurement variable; and
a database (139, 149) coupled to the data processing device (137, 147) and in which a plurality of reference signatures are stored, wherein in each case one reference signature is associated with one reference high-frequency disturbance, which (i) is caused by an operational electrical reference apparatus and (ii) can be transmitted to the electrical supply network (130, 140); wherein
the data processing device (137, 147) is configured in terms of programming to
(a) determine a characteristic signature of the electrical measurement variable, wherein the characteristic signature is indicative of the high-frequency disturbance;
(b) compare the characteristic signature with at least one selection of the plurality of reference signatures;
(c) select a reference signature having the greatest similarity to the characteristic signature; and
(d) detect the cause of the high-frequency disturbance, wherein that electrical apparatus of the several connected electrical apparatuses (132, 142) that corresponds in terms of its type to that electrical reference apparatus with which the selected reference signature is associated is identified as the cause.

15. Computer program for detecting the cause of a high-frequency disturbance in an electrical supply network (130, 140), to which several electrical apparatuses (132, 142) are connected, wherein the computer program is configured to carry out the method according to one of Claims 1 to 13 when it is executed by a processor (137, 147).

## Revendications

1. Procédé d'identification d'une installation électrique, qui provoque une perturbation de haute fréquence dans un réseau (130, 140) d'alimentation électrique, auquel sont connectées plusieurs installations (132, 142) électriques, dans lequel la perturbation de haute fréquence est dans un domaine de fréquence qui est au-dessus de 2 kHz et en-dessous de 1 000 kHz, le procédé comportant :
le relevé d'une courbe en fonction du temps d'une grandeur de mesure électrique du réseau d'alimentation électrique ;
la détermination d'une signature caractéristique de la grandeur de mesure électrique, la signature caractéristique étant indicatrice de la perturbation de haute fréquence ;
la comparaison de la signature caractéristique à une pluralité de signatures de référence mises en mémoire dans une base (139, 149) de données, une signature de référence étant associée respectivement à une perturbation de haute fréquence de référence, qui
i) est provoquée par une installation de référence électrique se trouvant en fonctionnement et
ii) peut être transmise au réseau (130, 140) d'alimentation électrique ;
la sélection d'une signature de référence, qui a la ressemblance la plus grande à la signature caractéristique et
l'identification du provocateur de la perturbation de haute fréquence, dans lequel on identifie comme perturbateur celles des plusieurs installations (132, 142) électriques connectées qui, du point de vue de leur type, correspondent à l'installation de référence électrique, à laquelle est associée la signature de référence sélectionnée.

2. Procédé suivant la revendication précédente,
dans lequel la grandeur de mesure électrique est la tension en un point de mesure du réseau d'alimentation électrique.

3. Procédé suivant l'une des revendications précédentes, dans lequel la détermination de la signature caractéristique comporte une transformation de la courbe en fonction du temps de la grandeur de mesure électrique relevée du domaine temporel au domaine fréquentiel.

4. Procédé suivant la revendication précédente, dans lequel la signature caractéristique dans le domaine fréquentiel est un spectre de fréquence, qui a au moins deux pics caractéristiques.

5. Procédé suivant la revendication 3, dans lequel la signature caractéristique dans le domaine fréquentiel est un spectre de fréquence, qui a au moins quatre pics caractéristiques.

6. Procédé suivant la revendication 3, dans lequel la signature caractéristique dans le domaine fréquentiel est un spectre de fréquence, qui a au moins six pics caractéristiques.

7. Procédé suivant l'une des revendications 4 à 6 précédentes , dans lequel on met en rapport entre elles des valeurs de fréquence, auxquelles se produisent les au moins deux pics du spectre fréquentiel et on tient compte des informations qui s'ensuivent dans la détection de la cause de la perturbation de haute fréquence.

8. Procédé suivant l'une des revendications précédentes, dans lequel la détection du provocateur de la perturbation de haute fréquence s'effectue en tenant compte
(a) d'une topologie connue à l'avance du réseau (130, 140) d'alimentation électrique,
(b) de la position d'un point de mesure pour le relevé de la grandeur de mesure électrique en rapport à la topologie et
(c) d'une position connue à l'avance d'au moins une installation (132, 142) électrique, qui est connectée au réseau (130, 140) d'alimentation électrique et dont on se demande si elle est le provocateur de la perturbation de haute fréquence.

9. Procédé suivant l'une des revendications précédentes, dans lequel la détection de la cause de la perturbation de haute fréquence s'effectue en tenant compte de l'instant de l'apparition de la perturbation de haute fréquence.

10. Procédé suivant l'une des revendications précédentes, dans lequel on met à jour et/ou on complète en recourant à des données extérieures les signatures de référence mises en mémoire dans la base (139, 149) de données.

11. Procédé suivant l'une des revendications précédentes, dans lequel l'installation de référence comprend une pluralité de sous-installations de référence électriques.

12. Procédé suivant l'une des revendications précédentes, dans lequel, lorsque l'on sélectionne une signature de référence, on exploite la similarité entre la signature caractéristique et la signature de référence concernée par la formation d'une différence entre la signature caractéristique et la signature de référence concernée.

13. Procédé de réduction d'une perturbation de haute fréquence dans un réseau (130, 140) d'alimentation électrique, auquel plusieurs installations (132, 142) électriques sont connectées, procédé dans lequel
on effectue le procédé suivant l'une des revendications précédentes et
on modifie l'état de fonctionnement de l'installation (132, 142) électrique identifiée comme la cause de manière à réduire l'intensité de la perturbation de haute fréquence.

14. Installation de détection de la cause d'une perturbation de haute fréquence dans un réseau (130, 140) d'alimentation électrique, auquel plusieurs installations (312, 142) électriques sont connectées, la perturbation de haute fréquence étant dans un domaine de fréquence, qui est au-dessus de 2 kHz et en-dessous de 1 000 kHz, l'installation comportant un capteur (135, 145) pour relever une courbe en fonction du temps d'une grandeur de mesure électrique du réseau (130, 140) d'alimentation électrique ;
un dispositif (137, 147) de traitement de données, monté en aval du capteur (135, 145), pour la réception et le traitement de valeurs de mesure, qui ont été relevées par le capteur (135, 145) et qui sont indicatrices de la grandeur de mesure électrique, et
une base (139, 149) de données, qui est adjointe au dispositif (137, 147) de traitement de données et dans laquelle sont mises en mémoire une pluralité de signatures de référence, respectivement une signature de référence étant associée à une perturbation de haute fréquence de référence, qui (i) est provoquée par une installation de référence électrique se trouvant en fonctionnement et (ii) peut être transmise sur le réseau (130, 140) d'alimentation électrique ; dans laquelle le dispositif (137, 147) de traitement de données est conçu en technique de programme pour
(a) la détermination d'une signature caractéristique de la grandeur de mesure électrique, la signature caractéristique étant indicatrice de la perturbation de haute fréquence ;
(b) la comparaison de la signature caractéristique à au moins une sélection de la pluralité de signatures de référence ;
(c) la sélection d'une signature de référence, qui a la similitude la plus grande à la signature caractéristique, et
(d) la détection de la cause de la perturbation de haute fréquence, celle des plusieurs installations (132, 142) électriques connectées étant identifiée comme cause qui, du point de vue de son type, correspond à l'installation de référence électrique, à laquelle la signature de référence sélectionnée est associée.

15. Programme d'ordinateur pour la détection de la cause d'une perturbation de haute fréquence dans un réseau (130, 140) d'alimentation électrique, auquel sont connectées plusieurs installations (132, 142) électriques, le programme d'ordinateur, lorsqu'il est réalisé par un processeur (137, 147), étant conçu pour effectuer le procédé selon l'une des revendications 1 à 13.
